# EUROPEAN PATENT APPLICATION

(11) **EP 2 919 439 A1**
(43) Date of publication of application: **16.09.2015**
(21) Application number: 14305368.4
(22) Date of filing: 14.03.2014
(51) Int. Cl.: H04L 29/08, H04L 12/863

(54) **Requesting web content**

(71) Applicant: ALCATEL LUCENT, 92100 Boulogne-Billancourt (FR)
(72) Inventor: Brend, Graham, Swindon, Wiltshire SN5 7DJ (GB); Jordan, Ian, Swindon, Wiltshire SN5 7DJ (GB)
(74) Representative: Leppard, Andrew John

(57) **Abstract**

A web server, a web server method, a web client, a web client method and computer program products are disclosed. The web server comprises: reception logic operable to receive a request for web content stored by the web server from a client, the request encoding information indicative of a priority associated with the request; priority logic operable to derive the priority associated with the request from the information; and serving logic operable to serve the request for web content in accordance with the priority associated with the request. In this way, the server is able to prioritise requests for web content that it has received. This enables end users having a higher priority request to receive their web content in preference to those having a lower priority request. This is particularly beneficial at times of high load when it is desired to maintain the performance of the web server for some requests over others. This also enables a web server to be provided with fewer resources since it can be configured to ensure that higher priority requests are still served with relatively high performance. This enables the server to manage the traffic which it receives and provides a flexible mechanism to handle those requests.

## Description

### FIELD OF THE INVENTION

The present invention relates to a web server, a web server method, a web client, a web client method and computer program products.

### BACKGROUND

Using the Internet for a variety of tasks is now commonplace for many Internet-enabled device users. Such tasks range from retrieving specific information on various topics of interest, to socialising and shopping. Web servers, web clients and the infrastructure and protocols used to connect them have evolved and continue to do so to match the increasing end user expectations about the performance of browsing and accessing data. Historically, when browsing the Internet, the performance experienced by the end user was typically limited by the transmission medium between the end user's device or its point of presence and the relevant server hosting the required website content. However, with the widespread deployment of superfast broadband, performance limitations introduced by the transmission medium have been reduced or largely eliminated. This increase in network performance causes unexpected consequences. Accordingly, it is desired to provide an improved technique for requesting web content.

### SUMMARY

According to a first aspect, there is provided a web server, comprising: reception logic operable to receive a request for web content stored by the web server from a client, the request encoding information indicative of a priority associated with the request; priority logic operable to derive the priority associated with the request from the information; and serving logic operable to serve the request for web content in accordance with the priority associated with the request.

The first aspect recognises that as the interconnections between a user device and web servers increase, this highlights potential performance bottlenecks, such as the performance of the website hosting server, which may adversely affect the performance experienced by the end user. Although there are various ways to manage traffic such as, for example, by buffering the requests until they can be served, this still impacts on the performance experienced by the end user.

Accordingly, a server, such as a web server may be provided. The web server may comprise reception logic which receives a request for web content from a client, such as a web client. The request may be for web content stored by the web server. The request may encode information which indicates a priority associated with the request. The web server may comprise priority logic which derives the priority associated with the request. The priority logic may derive the priority from the information encoded in the request. The web server may comprise serving logic which serves the request for the web content. The serving logic may serve the request in accordance with, having regard to or based on the priority associated with that request. In this way, the server is able to prioritise requests for web content that it has received. This enables end users having a higher priority request to receive their web content in preference to those having a lower priority request. This is particularly beneficial at times of high load when it is desired to maintain the performance of the web server for some requests over others. This also enables a web server to be provided with fewer resources since it can be configured to ensure that higher priority requests are still served with relatively high performance. This enables the server to manage the traffic which it receives and provides a flexible mechanism to handle those requests.

In one embodiment, the information comprises an indication of previously-accessed web content by the client. Accordingly, that content which has been previously accessed by the client may be used to derive a priority associated with the request. For example, it may be that it is desired to provide high performance to those users who are browsing different content on the same website and so those requests which indicate that other content from the same website has been previously accessed may result in a higher priority being allocated to the request. Alternatively, or additionally, it may be that it is desired to provide high performance to users who have browsed a competitor's website. Accordingly, should a competitor's website be indicated in the previously accessed web content then a higher priority may be associated with the request. This enables the server to allocate a priority based on the performance requirements or objectives set by the server operator.

In one embodiment, the information comprises an indication of a web browsing history of the client. Accordingly, that content which has been previously accessed by the client indicated by the history may be used to derive a priority associated with the request. For example, it may be that it is desired to provide high performance to those users who are browsing different content on the same website and so those requests which indicate that other content from the same website has been previously accessed may result in a higher priority being allocated to the request. Alternatively, or additionally, it may be that it is desired to provide high performance to users who have browsed a competitor's website. Accordingly, should a competitor's website be indicated in the history then a higher priority may be associated with the request. This enables the server to allocate a priority based on the performance requirements or objectives set by the server operator.

In one embodiment, the information comprises an indication of a referring website which referred the client to the web content. Accordingly, the priority may be set based on whether and which website has referred the client to the web content. Again, this enables the priority associated with the request to be varied depending on how the user was referred to the web content. For example, an operating agreement may exist between a referring website and the operator of the web server hosting the web content. This enables requests from some referring websites to be allocated a higher priority over requests from other referring websites.

In one embodiment, the information comprises an indication of a priority encoded by the request. Accordingly, the priority itself may be encoded within the request. This may be achieved by the user being provided with a link or with other information which is used when generating the request, in order to ensure that the request is allocated the required priority. The server may then simply decode this indication to provide the priority for that request.

In one embodiment, the information comprises an indication of a type of device on which the client is executing. Accordingly, the type of device which supports the client may be used when deciding on a priority to allocate to that request. For example, some types of devices may be preferable to prioritise over others in order to provide the end user with the required performance. Likewise, some types of devices may be limited in their performance and so it may be preferable to match the performance of the web server to the performance of the device.

In one embodiment, the priority logic is operable to derive one of a plurality of different priorities to be associated with the request based on the information. Accordingly, any of a number of different priorities may be allocated to a request.

In one embodiment, the priority logic is operable to allocate a default priority to requests which fail to include the information. Accordingly, when no information is encoded within the request, then a default or nominal priority may be allocated to those requests.

In one embodiment, the priority logic is operable to derive the one of a plurality of different priorities by comparing the information with pre-stored information and allocating a priority associated with pre-stored information matching the information. Accordingly, the web server may be configured by the operator to allocate different priorities in response to the information received. The mapping of the priorities to the information received may be achieved by a data structure resembling a look-up table which correlates the information with an allocated priority. It will be appreciated that this data structure may be updated by the operator as required and may even be updated dynamically based on the traffic load being received by the web server. This provides for significant flexibility of the web server when dealing with the requests.

In one embodiment, the priority logic is operable to allocate a default priority to requests where the information fails to match any of the pre-stored information. Accordingly, should information be provided which does not match any of the pre-stored information, then a default or nominal priority may be allocated to the request.

In one embodiment, the serving logic is operable to serve requests for web content having a higher priority in preference to requests for web content having a lower priority. Accordingly, those requests having a higher priority than others are processed prior to other requests.

In one embodiment, the serving logic is operable to place each request in at least one queue for serving in accordance its priority. Accordingly, a queuing or buffering system may be provided whereby each request is stored in a queue based on its priority. The web server may then start to empty the highest priority queue or buffer and, typically, only once that buffer is empty will it process the lower priority queues or buffers.

In one embodiment, the information comprises an indicator indicating a time period within which the request is to be served. Accordingly, the information may also indicate a period of time within which the request is to be served. The request may then be stored and processed by the web server prior to the time period expiring.

In one embodiment, the serving logic is operable to place each request in at least one queue for serving in accordance with its time period. Accordingly, different queues may be utilised based on the time period within which the request is to be processed. For example, each queue may relate to an absolute time by which the requests need to be served. This would mean that each queue may contain requests with different time periods within which they are to be served, based on when those requests were received and when they needed to be processed.

In one embodiment, the request comprises a hypertext transfer protocol request and the information is encoded in at least one of a header and payload portion. Hence, it will be appreciated that the information may be encoded in a variety of different ways within the request.

According to a second aspect, there is provided a web server method, comprising: receiving a request for web content stored by the web server from a client, the request encoding information indicative of a priority associated with the request; deriving the priority associated with the request from the information; and serving the request for web content in accordance with the priority associated with the request.

In one embodiment, the information comprises an indication of previously-accessed web content by the client.

In one embodiment, the information comprises an indication of a web browsing history of the client.

In one embodiment, the information comprises an indication of a referring website which referred the client to the web content.

In one embodiment, the information comprises an indication of a priority encoded by the request.

In one embodiment, the information comprises an indication of a type of device on which the client is executing.

In one embodiment, the step of deriving comprises deriving one of a plurality of different priorities to be associated with the request based on the information.

In one embodiment, the step of deriving comprises allocating a default priority to requests which fail to include the information.

In one embodiment, the step of deriving comprises deriving the one of a plurality of different priorities by comparing the information with pre-stored information and allocating a priority associated with pre-stored information matching the information.

In one embodiment, the step of deriving comprises allocating a default priority to requests where the information fails to match any of the pre-stored information.

In one embodiment, the step of serving comprises serving requests for web content having a higher priority in preference to requests for web content having a lower priority.

In one embodiment, the step of serving comprises placing each request in at least one queue for serving in accordance with its priority.

In one embodiment, the information comprises an indicator indicating a time period within which the request is to be served.

In one embodiment, the step of serving comprises placing each request in at least one queue for serving in accordance with its time period.

In one embodiment, the request comprises a hypertext transfer protocol request and the information is encoded in at least one of a header and payload portion.

According to a third aspect, there is provided a web client, comprising: priority logic operable to derive information indicative of a priority associated with a request for web content; transmission logic operable to transmit a request for said web content stored by a web server to said web server, said request encoding said information indicative of said priority associated with said request; and reception logic operable to receive said web content provided in response to said request.

In one embodiment, the information comprises an indication of previously-accessed web content by the client.

In one embodiment, the information comprises an indication of a web browsing history of the client.

In one embodiment, the information comprises an indication of a referring website which referred the client to the web content.

In one embodiment, the information comprises an indication of a priority encoded by the request.

In one embodiment, the information comprises an indication of a type of device on which the client is executing.

In one embodiment, the information comprises an indicator indicating a time period within which the request is to be served.

In one embodiment, the request comprises a hypertext transfer protocol request and the information is encoded in at least one of a header and payload portion.

According to a fourth aspect, there is provided a web client method, comprising: deriving information indicative of a priority associated with a request for web content; transmitting a request for the web content stored by a web server to the web server, the request encoding the information indicative of the priority associated with the request; and receiving the web content provided in response to the request.

In one embodiment, the information comprises an indication of previously-accessed web content by the client.

In one embodiment, the information comprises an indication of a web browsing history of the client.

In one embodiment, the information comprises an indication of a referring website which referred the client to the web content.

In one embodiment, the information comprises an indication of a priority encoded by the request.

In one embodiment, the information comprises an indication of a type of device on which the client is executing.

In one embodiment, the information comprises an indicator indicating a time period within which the request is to be served.

In one embodiment, the request comprises a hypertext transfer protocol request and the information is encoded in at least one of a header and payload portion.

According to a fifth aspect, there is provided a computer program product operable, when executed on a computer, to perform the method steps of the second or fourth aspects.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:

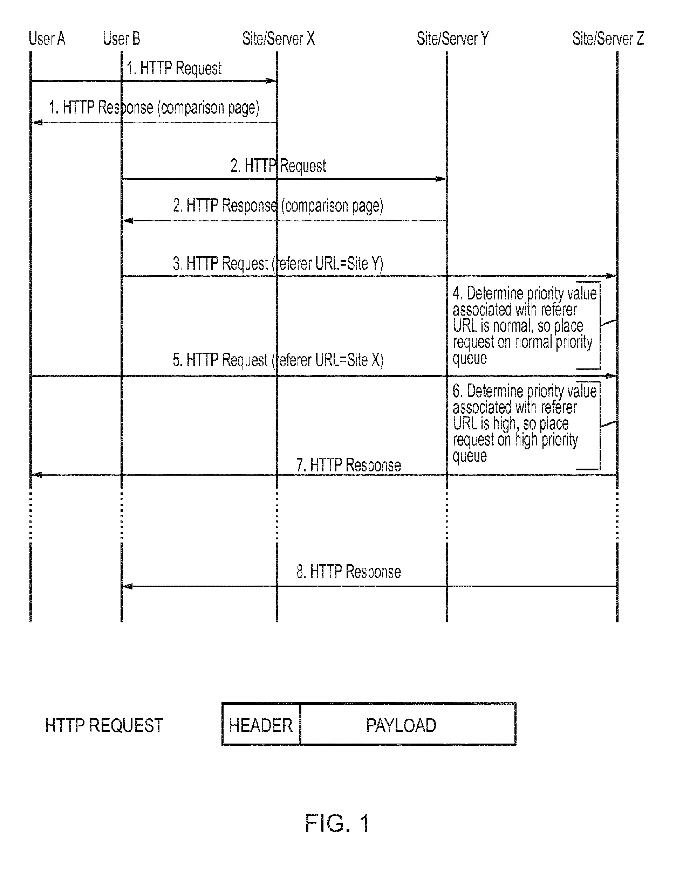

Figure 1 illustrates an example operation according to one embodiment.

### DESCRIPTION OF THE EMBODIMENTS

Before discussing the embodiments in any more detail, first an overview will be provided. Embodiments provide an arrangement which introduces a mechanism which is implemented on a server, such as a web server, supporting or providing web content, such as a designated website. The mechanism determines how to prioritise requests received from clients (such as a web browser) running on devices (such as a computing device) being operated by end users who are seeking to retrieve and access web pages or other content from the website. The mechanism typically prioritises the requests based on information provided to that server from which the server can then derive and allocate a priority to each request. It will be appreciated that a variety of different ways may be utilised to encode the information from which the priority for a particular request may be derived. For example, the request itself may include a priority value, although such an approach maybe subject to interference from end users in order to artificially prioritise their requests. In another approach, the request encodes information which may be extracted by the server and compared with pre-stored information within the server which indicates a priority to be associated with that information. This makes artificially manipulating the priority more difficult for the end user to achieve and also provides flexibility for the server to change priorities to be associated with particular requests.

In particular, information is specifically used as an input to the mechanism implemented on a web server hosting a designated website which queues the requests for content. The server typically maintains pre-stored information which either identifies how to extract a preconfigured priority value encoded within the requests, or which provides a mapping from information provided by the requests to a priority allocated by the server. The server can then use this to determine how to handle each request from the end user to retrieve the information from the website. This enables different requests to be prioritised over others, so that some requests are treated with a higher priority than others.

### Referring Website

In one arrangement, the information provided to the destination webserver with each request for content is an indication of a referring website or server. For example, referring information such as the uniform resource locator (URL) of the web page or an internet protocol (IP) address of the server previously accessed by the end user will be maintained on the destination webserver so that the destination webserver can determine from that URL or IP address a priority value associated with the request. The destination webserver can then use this to determine how to handle the request from the end user to retrieve the content. That is to say, the destination webserver which receives the request will be provided with a URL of the website or the IP of the server that referred the user. The referring website may be another website hosted by another server (for example, a user may access a first website on a first webserver to identify some content and that website may refer the user to the destination website on a second website), or the referring website may also be hosted by the destination web server (that is to say, the requests are generated through interaction within the same website or within websites hosted by the same server). A priority value is then derived based on this information using pre-stored information which associates a priority value with different referring websites or servers indicated by the information. For example, if the information indicates that the referring website is www.referrer123.com or an IP address of w.x.y.z then the pre-stored information may indicate that a first priority value is to be allocated, whereas if the information indicates that the referring website is www.referrer456.com or an IP address of a.b.c.d then the pre-stored information may indicate that a second priority value may be allocated.

The derived priority value is then used to prioritise requests from certain referring URLs above others so that users who "click through" from specific websites to the destination webserver will have their requests treated at a higher priority than others. This could be based on an operational agreement between the owners of the destination website and the owners of the referring websites so that, for example, users of certain websites who then "click through" to one of the websites listed are prioritised over users who have not used that specific website.

This provides a mechanism for certain websites to differentiate themselves from other similar websites by offering improved performance to their users. Similarly, requests from users who are referred to the destination website from web pages that are owned by the same organisation as the destination website may be prioritised over other users who are not. This helps to improve the performance of the website for existing users when browsing between different content provided by that website.

### Embedded Priority

In one arrangement, the information used to determine the priority of a request is not derived from a referring URL, but is instead derived from a specific value encoded in, for example, a referring email or other communication to the user. This would typically be used when emails are sent to targeted users who may be interested or required to access the relevant web content. The information encoded in the referring communication is used when generating the request sent to the destination web server. Typically, the information would be encoded within the header or body of the request, rather than being visible to the user.

The destination web server may extract the information and use this as a priority value or may correlate the information against pre-stored information to derive the priority value.

### Browsing History

In one arrangement, the priority value is derived from browsing history information that the referring web page sends to the destination webserver when requesting web content from that destination website. Apriority value is then derived based on this information using pre-stored information which associates a priority value with different websites or servers indicated by the information in a similar manner to that described above. For example, if the information indicates that a recent website is www.recent123.com or a recent IP address of d.e.f.g then the pre-stored information may indicate that a first priority value is to be allocated, whereas if the information indicates that a recent website is www.recent456.com or recent IP address of g.h.i.j then the pre-stored information may indicate that a second priority value may be allocated.

Such a priority value can then be used, for example, to prioritise requests from end users who have visited particular websites so that the end user is provided with an enhanced service when accessing this particular website and provides the owner of the destination website with a mechanism to differentiate themselves over those other websites.

### Location

In one arrangement, the priority value is derived from information provided that identifies the location of the user such as, for example, the IP address associated with the device that the user is using to access the website, or cellular or global positioning information.

A priority value is then derived based on this information using pre-stored information which associates a priority value with different locations in a similar manner to that described above. For example, if the information indicates a first location then the pre-stored information may indicate that a first priority value is to be allocated, whereas if the information indicates a second location then the pre-stored information may indicate that a second priority value may be allocated.

This again provides a mechanism to prioritise some requests over others based on the geographical location of the users.

### Device Type

In one arrangement, the priority value is derived from information that identifies the device that the user is using to access the website. This may be the device's make or model or its capabilities. It may be desirable in certain circumstances to prioritise the requests of some users of particular devices over other users.

A priority value is then derived based on this information using pre-stored information which associates a priority value with different types of devices in a similar manner to that described above. For example, if the information indicates a first type of device then the pre-stored information may indicate that a first priority value is to be allocated, whereas if the information indicates a second type of device then the pre-stored information may indicate that a second priority value may be allocated.

### Request Latency

In one arrangement, the mechanism implemented on the destination server does not just determine a priority value associated with the requests but, instead, also determines how long the request should be queued for so that, even during periods of high traffic, each request would be guaranteed a level of service from the server. This time period may be varied by the server operator to provide different response speeds depending on the referring information. The latency period may be derived by the autonomously by the server or may be based on information provided from the client/

The latency period is also derived based on the information using pre-stored information which associates a latency period with the information in a similar manner to that described above.

It will be appreciated that a variety of different mechanisms may be used to queue and process each request by the period required by its associated latency period.

It will also be appreciated that the examples mentioned above are not mutually exclusive and may be combined in a variety of different combinations.

The mechanisms described above may be controlled by the website server operator during periods of high traffic (or when periods of high traffic are expected) such that when it is likely that a website server has to handle multiple simultaneous requests, the requests are provided with priority values and/ or latency periods. This enables the requests to be buffered, thereby avoiding the website server crashing, and prioritised for subsequent handling by the server in an appropriate manner.

### Pre-Stored Information

To enable the website server to determine a priority, information is stored by the website server which enables a priority value for each request to be derived. That information may, for example, be an algorithm which is used to extract information encoded within the body or header of the request, or which extracts information encoded in the URL of the request. Likewise, the server may pre-store information which identifies a priority to be given based on the information provided as mentioned above. For example, pre-stored information may indicate a priority to be given to particular referring URLs based on the provided browsing history, the websites that the user has previously visited, information encoded in a link provided to the user, the particular make, type or model of the device, as well as optionally whether a particular guaranteed level of service is required to be provided.

In the event that it is not possible to derive a priority value, no value or a default priority value will be given. This may occur because the user has accessed the destination website from a non-preferred website or because there is no referring information. The mechanism would then not prioritise these requests which are instead buffered and handled normally when server resources are available.

Accordingly, it can be seen that this mechanism provides the operator of the server or website with the ability to flexibly instigate an approach that alters the normal or typical prioritisation of handling requests at any particular time, so that the operator can control who the prioritised referrers are, as and when necessary.

### Example Operation

In the following example, illustrated in Figure 1, user A is browsing the Internet and has decided to access a price comparison website hosted on server X to compare residential energy prices between competing energy providers. User A has decided to perform a comparison just after an increase in energy costs has been announced and, hence, there are numerous other users also looking for new deals. This causes considerable traffic which needs to be dealt with by many servers hosting different websites. It will be appreciated that there are numerous other scenarios where the performance of servers may be affected by user traffic and require request prioritisation.

User B is also browsing the Internet to look for a comparison of energy deals and has accessed a rival comparison website hosted on server Y.

The owners of comparison website X have negotiated an operational agreement with the top five energy providers, so that any user referred from website X will be given priority when accessing any of the top five energy provider websites.

At this particular time, the demand on the energy provider websites is high and, hence, requests received at the website servers have to be buffered.

User A decides to select an offer on comparison website X and is redirected to a specific energy provider's website hosted on server Z. Due to the agreement between website X and the energy provider having its website on server Z, user A's request is given a high priority and is handled before other pending requests using the technique mentioned above. At the same time, user B accesses comparison website Y and also selects the same energy provider as user A having its website on server Z. However, because website Y does not have an agreement in place with the energy providers, user B's request is not given priority handling, hence it is handled at a lower priority, again using the technique mentioned above. Accordingly, as can be seen in Figure 1, the following steps occur:
1. User A uses their device to access website X and performs a price comparison on current energy deals.
2. User B uses their device to access website Yand also performs a price comparison on current energy deals.
3. User B uses website Yto select an energy provider for a deal and is redirected to the associated website Z.
4. Currently there is a high demand for access to website Z. Hence, the server hosting website Z has been configured to look up a priority value based on the referrer's URL. After performing the look-up, the server hosting website Z determines that the request from website Y should be given a normal priority and is placed in the appropriate queue.
5. User A selects the same energy provider as user B and is redirected to website Z.
6. After performing a look-up, the server hosting website Z determines that the request from website X should be given a high priority and, hence, it is placed in the appropriate queue.
7. The request referred from website X by user A reaches the front of the high priority queue and the server hosting website Z sends a response back.
8. Sometime later, the request referred from website Yby user B reaches the front of the normal priority queue and a response is sent back to user B.

It will be appreciated that Figure 1 illustrates the steps using idealised representations of the HTTP messaging (for example, the HTTP request would most likely be realised by an HTTP get, etc.). It will be appreciated that the information encoded within the request which is accessed by the server to determine a priority value may be encoded within the header or body of the HTTP request, as also illustrated in Figure 1.

Accordingly, this approach provides the owners or administrators of websites with a flexible and configurable approach to manage traffic received on the relevant website server. Such flexibility allows the definition of priority handling of the received request so that an effective queuing mechanism can be implemented for use during periods of high traffic, or based on agreements between operators.

In the example above using device types, well known research links purchasers of certain types of device with specific socio-economic groups, so if for example the user is using a high value they typically fall into certain socio-economic groups, that typically have a high disposable income and hence the derived priority value used to decide how to prioritise access to the destination website is linked to the determined likely socio-economic group of the user. Such determination of the likely socio-economic profile being pre-configured on the destination website server.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A web server, comprising:
reception logic operable to receive a request for web content stored by said web server from a client, said request encoding information indicative of a priority associated with said request;
priority logic operable to derive said priority associated with said request from said information; and
serving logic operable to serve said request for web content in accordance with said priority associated with said request.

2. The web server of claim 1, wherein said information comprises an indication of previously-accessed web content by said client.

3. The web server of claim 1 or 2, wherein said information comprises an indication of a web browsing history of said client.

4. The web server of any preceding claim, wherein said information comprises an indication of a referring website which referred said client to said web content.

5. The web server of any preceding claim, wherein said information comprises one of an indication of a priority encoded by said request and an indication of a type of device on which said client is executing.

6. The web server of any preceding claim, wherein said priority logic is operable to derive one of a plurality of different priorities to be associated with said request based on said information.

7. The web server of claim 6, wherein said priority logic is operable to derive said one of a plurality of different priorities by comparing said information with pre-stored information and allocating a priority associated with pre-stored information matching said information.

8. The web server of any preceding claim, wherein said priority logic is operable to allocate a default priority to requests where said information fails to match any of said pre-stored information.

9. The web server of any preceding claim, wherein said serving logic is operable to place each request in at least one queue for serving in accordance with its priority.

10. The web server of any preceding claim, wherein said information comprises an indicator indicating a time period within which said request is to be served.

11. The web server of claim 10, wherein said serving logic is operable to place each request in at least one queue for serving in accordance with its time period.

12. A web server method, comprising:
receiving a request for web content stored by said web server from a client, said request encoding information indicative of a priority associated with said request;
deriving said priority associated with said request from said information; and
serving said request for web content in accordance with said priority associated with said request.

13. A web client, comprising:
priority logic operable to derive information indicative of a priority associated with a request for web content;
transmission logic operable to transmit a request for said web content stored by a web server to said web server, said request encoding said information indicative of said priority associated with said request; and
reception logic operable to receive said web content provided in response to said request.

14. A web client method, comprising:
deriving information indicative of a priority associated with a request for web content;
transmitting a request for said web content stored by a web server to said web server, said request encoding said information indicative of said priority associated with said request; and
receiving said web content provided in response to said request.

15. A computer program product operable, when executed on a computer, to perform the method steps of any one of claims 12 and 14.

## Amended claims

### Amended claims in accordance with Rule 137(2) EPC.

1. A web server, comprising:
reception logic operable to receive a request for web content stored by said web server from a client, said request encoding information indicative of a priority associated with said request;
priority logic operable to derive said priority associated with said request from said information; and
serving logic operable to serve said request for web content in accordance with said priority associated with said request; wherein
said information comprises an indication of previously-accessed web content by said client.

2. The web server of claim 1, wherein said information comprises an indication of a web browsing history of said client.

3. The web server of any preceding claim, wherein said information comprises an indication of a referring website which referred said client to said web content.

4. The web server of any preceding claim, wherein said information further comprises one of an indication of a priority encoded by said request and an indication of a type of device on which said client is executing.

5. The web server of any preceding claim, wherein said priority logic is operable to derive one of a plurality of different priorities to be associated with said request based on said information.

6. The web server of claim 5, wherein said priority logic is operable to derive said one of a plurality of different priorities by comparing said information with pre-stored information and allocating a priority associated with pre-stored information matching said information.

7. The web server of any preceding claim, wherein said priority logic is operable to allocate a default priority to requests where said information fails to match any of said pre-stored information.

8. The web server of any preceding claim, wherein said serving logic is operable to place each request in at least one queue for serving in accordance with its priority.

9. The web server of any preceding claim, wherein said information further comprises an indicator indicating a time period within which said request is to be served.

10. The web server of claim 9, wherein said serving logic is operable to place each request in at least one queue for serving in accordance with its time period.

11. A web server method, comprising:
receiving a request for web content stored by said web server from a client, said request encoding information indicative of a priority associated with said request, said information comprising an indication of previously-accessed web content by said client;
deriving said priority associated with said request from said information; and
serving said request for web content in accordance with said priority associated with said request.

12. A web client, comprising:
priority logic operable to derive information indicative of a priority associated with a request for web content;
transmission logic operable to transmit a request for said web content stored by a web server to said web server, said request encoding said information indicative of said priority associated with said request, said information comprising an indication of previously-accessed web content by said client; and
reception logic operable to receive said web content provided in response to said request.

13. A web client method, comprising:
deriving information indicative of a priority associated with a request for web content;
transmitting a request for said web content stored by a web server to said web server, said request encoding said information indicative of said priority associated with said request, said information comprising an indication of previously-accessed web content by said client; and
receiving said web content provided in response to said request.

14. A computer program product operable, when executed on a computer, to perform the method steps of any one of claims 11 and 13.
